# EUROPÄISCHE PATENTSCHRIFT

(11) **EP 0 722 875 B1**
(45) Veröffentlichungstag und Bekanntmachung des Hinweises auf die Patenterteilung: **09.09.1998**
(21) Anmeldenummer: 95119305.1
(22) Anmeldetag: 07.12.1995
(51) Int. Cl.: B61H 7/08

(54) **Magnetische Bremse, insbesondere lineare Wirbelstrombremse**
Magnetical brake, in particular linear Eddy-current brake
Frein magnétique, en particulier frein linéaire à courants de Foucault

(30) Priorität: 19.01.1995 DE 19501548
(43) Veröffentlichungstag der Anmeldung: 24.07.1996
(73) Patentinhaber: KNORR-BREMSE Systeme für Schienenfahrzeuge GmbH, 80809 München (DE)
(72) Erfinder: Elstorpff, Marc, Dr., D-80637 München (DE); Staltmeir, Josef, D-80807 München (DE); Graf, Thomas, D-86633 Neuburg/Donau (DE)

(56) Entgegenhaltungen:
- CH-A- 309 292
- DE-A- 2 035 781
- DE-A- 2 105 565
- DE-A- 2 340 774
- DE-A- 2 614 298
- DE-C- 148 086
- DE-U- 7 220 225
- AET ARCHIV FÜR EISENBAHNTECHNIK, HESTRA VERLAG, 1990, Bd 43, Kap 2.5.2, Seiten 67-69

## Beschreibung

Die Erfindung betrifft eine lineare Wirbelstrombremse nach dem Gattungsbegriff des Patentanspruches 1.

Wirbelstrombremsen wird in neuerer Zeit - insbesondere im Rahmen der Weiterentwicklung von Hochgeschwindigkeitszügen - erhöhte Aufmerksamkeit zugewandt, denn da sie die Schiene beim Bremsen nicht berühren, sind sie verschleißfrei. Ein weiter Vorteil besteht darin, daß ihre Bremskraft absolut unabhängig vom Haftwert zwischen Rad und Schiene ist.

Eine kurze Einführung in die Technologie der Wirbelstrombremsen für Schienenfahrzeuge - deren Funktion auf dem Induktionsgesetz basiert - findet sich beispielsweise in dem Buch von Saumweber et al 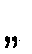 AET - Archiv für Eisenbahntechnik, Hestra-Verlag, Bd. 43, Kap. 2.5.2". Wirbelstrombremsen bestehen danach aus einem Eisenjoch mit mehreren Polkernen. Elektrische Spulen erregen die Bremse magnetisch derart, daß alternierend magnetische Nord- und Südpole entstehen. Bei Bewegung der erregten Wirbelstrombremse über die Schiene - d.h. bei einer Bremsung - ergeben sich durch die zeitlichen Flußänderungen elektromagnetische Felder und Wirbelströme. Das sekundäre, durch die Wirbelströme hervorgerufene, Magnetfeld ist dem Magnetfeld der Bremse entgegengerichtet. Die sich daraus ergebende, entgegengesetzt zur Fahrtrichtung wirkende, horizontale Kraftkomponente ist die Bremskraft.

Im Gegensatz zur Magnetschienenbremse berührt die lineare Wirbelstrombremse bei einer Bremsung nicht die Schiene, sondern sie wird in eine Höhe von etwa 7 mm oberhalb der Schiene gehalten. Die Bremse wird im allgemeinen in etwa gleicher Weise wie die Magnetschienenbremse in ein Drehgestell eingebaut. Um den Abstand der Bremse zur Schiene konstant einhalten zu können, müssen sich die Bremsmagnete jedoch über einen Bremsträger an einem ungefederten Teil des Drehgestells - z.B. auf den Radlagern - abstützen. Dabei wird das Magnetjoch der Bremse an einem Bremsträger befestigt, der wiederum mit dem Drehgestell verbunden ist. Eine derartige gattungsgemäße Anordnung zeigt z.B. die DE-OS 26 14 298. Die Schritt zeigt beidseits der Radsätze unter dem Drehgestellrahmen angeordnete Bremsträger zur Halterung der Wirbelstrombremse. Die parallel zur Schiene ausgerichteten Träger sind an ihrer Unterseite mit Bremsmagneten versehen, die zusammen mit dem Bremsträger in die Nähe der Schiene und von dieser weg bewegt werden können.

Die Erfindung zielt darauf ab, den konstruktiven Aufbau der gattungsgemäßen Bremsen in Hinsicht auf ihre Aufhängung zu verbessern. Insbesondere soll die Wirbelstrombremse bei hoher Steifigkeit der Aufhängung ein möglichst niedriges Gewicht aufweisen.

Die Erfindung erreicht dieses Ziel durch den Gegenstand des Anspruches 1. Die Erfindung basiert auf der Idee, die vermeintlich notwendige Unterteilung der Bremskonstruktion in einen Bremsaufhängungsabschnitt und einen Bremsabschnitt nicht mehr - wie beim Stand der Technik - als vorgegeben hinzunehmen, und zwei voneinander unabhängige Bauteile getrennt zu optimieren. Die Erfindung geht vielmehr den überraschend einfachen Weg, die beiden Funktionen Joch und Träger zu einer Integral- bzw. Baueinheit zusammenzufassen.

Bei einer besonders bevorzugten Weiterbildung der Erfindung weist die Integraleinheit zwei gurtartige Abschnitte auf - z.B. nach Art von in der Einbaustellung der Bremse längs der Bremse und parallel zur Schiene verlaufenden Ober- und Untergurten. Vorteilhafterweise wird jeweils einer der Gurte direkt über den Bremsmagneten angeordnet. Der oberhalb der Bremsmagnete verlaufende Gurt übernimmt hierbei auf vorteilhafte Weise die Jochfunktion und wirkt gleichzeitig auch als Träger. Die Unterteilung in einen Ober- und einen Untergurtabschnitt ermöglicht ferner eine Verteilung von Zug- und Druckbelastungen in Hinsicht auf die Tragefunktion der Integraleinheit. Bei einer Ausführungsform der Erfindung ist der Obergurt unter Abstand oberhalb des Magnetkerns angeordnet und über einen Steg mit dem Untergurt einstückig verbunden; letzterer befindet sich direkt über dem Magnetkern und bildet das Magnetjoch.

Es ist ferner vorteilhaft, den Untergurt zweiteilig unterhalb der Spule an den beiden Außenseiten des Magnetkerns anzuordnen wodurch sich eine Wirbelstrombremse mit einer besonders kompakten Bauweise ergibt. Besonders vorteilhaft ist ferner eine Auslegung der Integral- bzw. Baueinheit als geschlossenes Kastenprofil, wobei die Spulen direkt in den Kasten eingegossen oder separat eingesetzt sind und/oder Obergurt und Spulenkern einstückig miteinander verbunden sind.

Nachfolgend wird die Erfindung unter Bezug auf die Zeichnung anhand von Ausführungsbeispielen näher beschrieben, wobei auch weitere Vorteile und Möglichkeiten der Erfindung deutlich werden. Es zeigt:
Figur 1 eine Schnittansicht eines ersten Ausführungsbeispiels einer erfindungsgemäßen Wirbelstrombremse;
Figur 2 eine Schnittansicht eines zweiten Ausführungsbeispiels einer erfindungsgemäßen Wirbelstrombremse;
Figur 3 eine Schnittansicht eines dritten Ausführungsbeispiels einer erfindungsgemäßen Wirbelstrombremse.

Begriffe wie 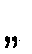 oben", 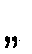 unten" usw. beziehen sich auf Wirbelstrombremsen und deren Aufhängung in ihrer normalen Einbaustellung und sind nicht einschränkend zu verstehen.

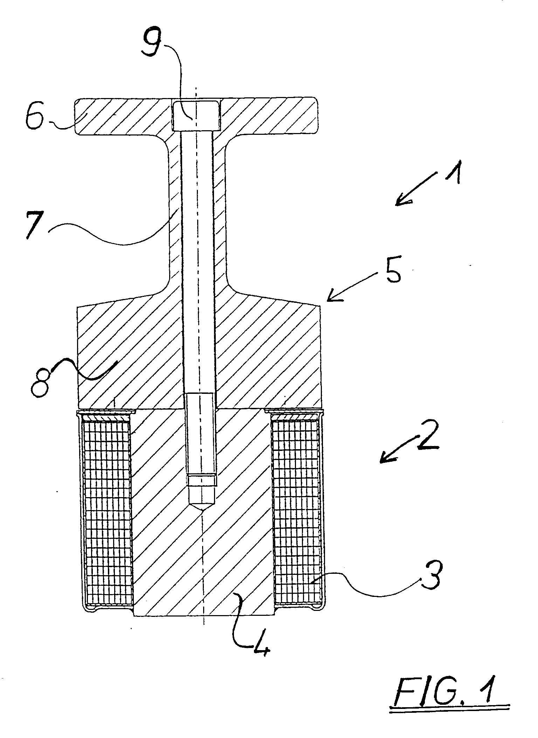

Zunächst sei das Ausführungsbeispiel der Figur 1 beschrieben. Figur 1 zeigt eine Wirbelstrombremse 1, die an einem (nicht dargestellten) Drehgestell befestigbar ist (siehe z.B. die bereits genannte DE-OS 26 14 298). Die Wirbelstrombremse 1 weist Bremsmagneten 2 auf, deren zentrale Elemente jeweils Magnetspule 3 und Magnetkern 4 sind.

Eine erfindungsgemäße Integraleinheit 5 kombiniert die Funktionen Magnetjoch und Träger, d.h. sie vereinigt diese nach dem Stand der Technik bisher getrennten Funktionen in einem Bauelement. Die Integraleinheit weist nach Figur 1 einen Obergurt 6 auf, der über mindestens einen Steg 7 einstückig mit einem Untergurt 8 verbunden ist. Obergurt 6 und Untergurt 8 haben rechteckige Querschnitte, wobei der Obergurt 6 im wesentlichen Druck- und der Untergurt 8 im wesentlichen Zugspannungen aufnimmt. An den Untergurt 8 sind wiederum die Bremsmagneten 2 angeschraubt (hier z.B. über Schrauben 9). Alternativ können auch mehrere Stege nach Art eines Kastens vorgesehen sein.

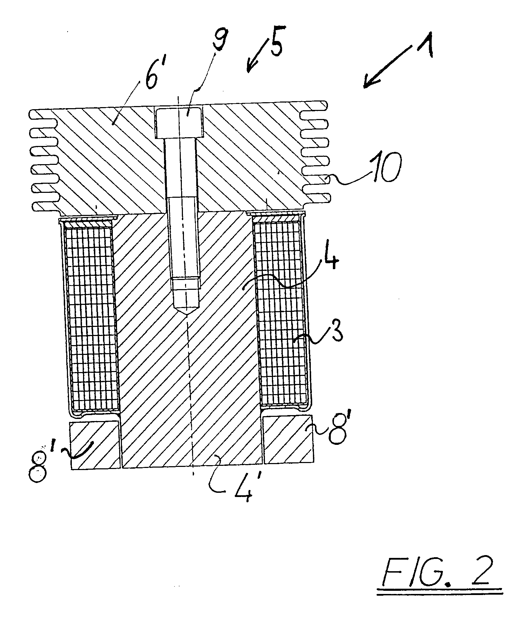

Das Ausführungsbeispiel der Figur 2 unterscheidet sich von dem Ausführungsbeispiel der Figur 1 insbesondere dadurch, daß als Untergurt 8 zwei parallele schienenförmige Untergurtabschnitte 8' unterhalb der Magnetspule 3 beidseits eines über die Länge der Magnetspulen nach unten vorstehenden Abschnittes 4' des Magnetkernes 4 vorgesehen sind. Der Steg 7 kann damit gegenüber dem Ausführungsbeispiel aus Figur 1 eingespart werden, was zu einer besonders kompakten Bauweise führt, die auch beengten Einbauverhältnissen gerecht wird. Der Obergurt 6 übernimmt gemäß Figur 2 sowohl Trage- als auch Magnetjochfunktion. Zur Wärmeableitung sind an den beiden Außenseiten des Obergurtes 6 Kühlrippen 10 angeformt.

Zur Versteifung der Konstruktion eignen sich beispielsweise schubsteife Verbindungen zwischen Ober- und Untergurt an den Enden der Wirbelstrombremse oder aber Verstrebungen zwischen Ober- und Untergurt, die jeweils zwischen den Bremsmagneten verlaufen (nicht dargestellt).

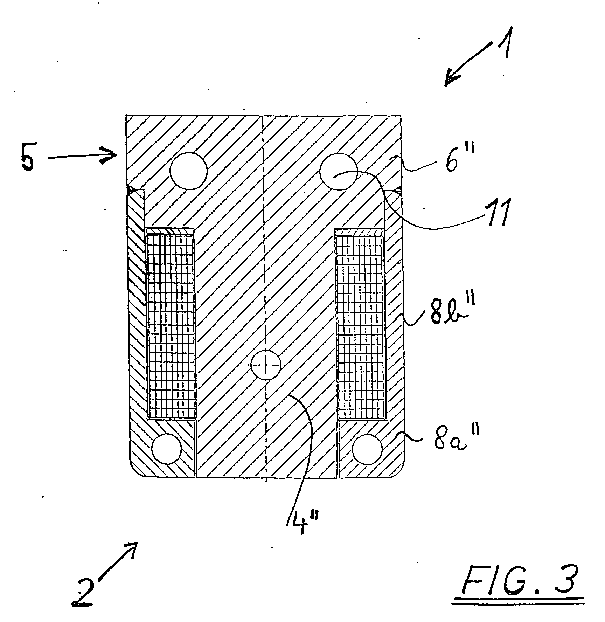

Bei der Ausführungsform nach Figur 3 sind Obergurt und Magnetkern miteinander vereint, wobei der Obergurt die Magnetjochfunktion übernimmt; an einen sich zwischen den Magnetspulen erstreckenden Magnetkernabschnitt 4'' ist nach oben hin ein Obergurtabschnitt 6'' angeformt. Der Untergurt weist - ähnlich zur Figur 2 - zwei schienenartige Untergurtabschnitte 8a'' auf, an die nach oben hin zwei Plattenabschnitte 8b'' angeformt sind, welche die Magnetspulen 3 an ihren Außenseiten nach außen hin ab abdecken. Die Magnetspulen 3 sind damit praktisch von einem Kastenprofil umschlossen, was zu einer besonders robusten und kompakten (und dennoch sehr biegesteif auslegbaren) Bauform führt, die auch widrigsten Umwelteinflüssen und schwierigsten Einbaubedingungen gerecht wird. Der Untergurt 8''a, 8b'' nimmt im wesentlichen Zugbelastungen und der Obergurt 6 Druckbelastungen auf. Kühlkanäle 11 im Magnetkern und im Untergurt 8 und/oder hohle Spulendrähte sorgen für eine gute Wärmeableitung.

Zur Herstellung der Integraleinheit eigenen sich z.B. Stahlgußmaterialien mit einem möglichst geringen Kohlenstoffgehalt oder eine entsprechende Schweißkonstruktion.

## Patentansprüche

1. Lineare Wirbelstrombremse für Schienenfahrzeuge, mit am Schienenfahrzeug längsseitig sich erstreckenden, an Radlagern wenigstens zweier Radsätze geführten Bremsträgern, an welchen mehrere, aus Spule (3) und Magnetkern (4) gebildete, einem Magnetjoch zugeordnete Bremsmagnete (2) angeordnet sind, **dadurch gekennzeichnet**, daß das Magnetjoch der Bremsmagnete (2) durch den Bremsträger gebildet ist, derart, daß dieser als Integraleinheit (5) Magnetjoch- und Trägerfunktion vereint.

2. Lineare Wirbelstrombremse nach Anspruch 1, **gekennzeichnet durch** folgende Merkmale:
a) die Integraleinheit (5) besteht aus einem Obergurt (6) und einem mit diesem verbundenen Untergurt (8); und
b) die Bremsmagnete (2) sind jeweils an der Unterseite des Obergurts (6) oder an der Unterseite des Untergurts (8) befestigt, derart, daß das Magnetjoch durch Obergurt oder Untergurt gebildet ist.

3. Lineare Wirbelstrombremse nach Anspruch 2, **gekennzeichnet durch** folgende Merkmale:
a) Obergurt (6) und Untergurt (8) sind mittels eines Steges (7) in Form eines Doppel-T-Trägers miteinander verbunden; und
b) das Magnetjoch ist durch den Untergurt (8) gebildet, derart, daß die Magnetspule (3) und der Magnetkern (4) jedes Bremsmagneten (2) an der Unterseite des Untergurts (8) befestigt sind.

4. Lineare Wirbelstrombremse nach Anspruch 2, **gekennzeichnet durch** folgende Merkmale:
a) die Bremsmagnete (2) aus Magnetspule (3) und Magnetkern (4) sind jeweils an der Unterseite des Obergurts (6) befestigt, derart, daß der Obergurt das Magnetjoch der Bremsmagnete bildet; und
c) der Untergurt (8) ist durch zwei parallel unterhalb der Magnetspule (3) verlaufende, zwischen sich den Magnetkern (4) einfassende Untergurtabschnitte (8') gebildet.

5. Lineare Wirbelstrombremse nach Anspruch 2, **gekennzeichnet durch** folgende Merkmale:
a) die Bremsmagnete (2) aus Magnetspule (3) und Magnetkern (4) sind jeweils an der Unterseite des Obergurts (6) angeordnet, derart, daß der Obergurt das Magnetjoch der Bremsmagnete bildet, wobei der Magnetkern (4) einstückig mit dem Obergurt (6) ausgebildet ist und sich von diesem nach unten durch den Innenquerschnitt der Magnetspule (3) erstreckt; und
b) der Untergurt (8) ist durch zwei parallel unterhalb der Magnetspule (3) verlaufende, zwischen sich den Magnetkern (4) einfassende Untergurtabschnitte (8a'') und zwei einstückig sich daran senkrecht anschließende und die Magnetspule (3) außenseitig abdeckende Plattenabschnitte (8b'') gebildet, welche mit dem Obergurt (6) verbunden sind, derart, daß Obergurt und Untergurt ein geschlossenes Kastenprofil bilden, in welches die Magnetspulen (3) direkt eingegossen oder separat eingesetzt sind.

## Claims

1. Linear eddy-current brake for rail vehicles, having brake carriers extending along the longitudinal side of the rail vehicle and guided on wheel bearings of at least two sets of wheels, on which brake carriers several brake magnets (2), formed from a coil (3) and a magnet core (4) and associated with a magnet yoke, are arranged, **characterised in that** the magnet yoke of the brake magnets (2) is formed by the brake carrier in such a way that it combines the magnet yoke and carrier functions as an integral unit (5).

2. Linear eddy-current brake according to claim 1, **characterised by** the following features:
a) the integral unit (5) comprises an upper flange (6) and a lower flange (8) connected to this; and
b) the brake magnets (2) are each secured on the underside of the upper flange (6) or on the underside of the lower flange (8) in such a way that the magnet yoke is formed by the upper flange or lower flange.

3. Linear eddy-current brake according to claim 2, **characterised by** the following features:
a) upper flange (6) and lower flange (8) are joined together in the form of a double T-carrier by means of a crosspiece (7); and
b) the magnet yoke is formed by the lower flange (8), in such a way that the magnet coil (3) and the magnet core (4) of each brake magnet (2) are secured on the underside of the lower flange (8).

4. Linear eddy-current brake according to claim 2, **characterised by** the following features:
a) the brake magnets (2) comprising magnet coil (3) and magnet core (4) are respectively secured on the underside of the upper flange (6) in such a way that the upper flange forms the magnet yoke of the brake magnets; and
b) the lower flange (8) is formed by two lower flange portions (8') extending in parallel below the magnet coil (3) and including the magnet core (4) between them.

5. Linear eddy current brake according to claim 2, **characterised by** the following features:
a) the brake magnets (2) comprising magnet coil (3) and magnet core (4) are respectively arranged on the underside of the upper flange (6) in such a way that the upper flange forms the magnet yoke of the brake magnets, the magnet core (4) being constructed in one piece with the upper flange (6) and extending downwards from this through the internal cross-section of the magnet coil (3); and
b) the lower flange (8) is formed by two lower flange portions (8a'') extending in parallel below the magnet coil (3) and including the magnet core (4) between them, and two plate portions (8b'') joined in one piece perpendicularly thereto and covering the outside of the magnet coil (3), these plate portions being joined to the upper flange (6) in such a way that the upper flange and lower flange form a closed box profile into which the magnet coils (3) are directly cast or separately inserted.

## Revendications

1. Frein linéaire à courants de Foucault pour véhicules sur rails, comportant des supports de freins, qui s'étendent longitudinalement sur le véhicule sur rails et sont guidés sur des roulements de roues d'au moins deux ensembles de roues et sur lesquels sont disposés plusieurs aimants de freinage (2) constitués par une bobine (3) et un noyau magnétique (4) et associés à une culasse magnétique, caractérisé en ce que la culasse magnétique des aimants de freinage (2) est formée par le support de frein de telle sorte que ce dernier réunit, sous la forme d'unité monobloc (5), la fonction de culasse magnétique et la fonction de support.

2. Frein linéaire à courants de Foucault selon la revendication 1, caractérisé par les caractéristiques suivantes :
a) l'unité monobloc (5) est constituée par une membrure supérieure (6) et par une membrure inférieure (8) reliée à la précédente ; et
b) des aimants de freinage (2) sont fixés respectivement à la face inférieure de la membrure supérieure (6) ou à la face inférieure de la membrure inférieure (8) de telle sorte que la culasse magnétique est formée par la membrure supérieure et par la membrure inférieure.

3. Frein linéaire à courants de Foucault selon la revendication 2, caractérisé par les caractéristiques suivantes :
a) la membrure supérieure (6) et la membrure inférieure (8) sont reliées entre elles au moyen d'une barrette (7) se présentant sous la forme d'un support en T double ; et
b) la culasse magnétique est formée par la membrure inférieure (8) de telle sorte que la bobine magnétique (3) et le noyau magnétique (4) de chaque aimant de freinage (2) sont fixés à la face inférieure de la membrure inférieure (8).

4. Frein linéaire à courants de Foucault selon la revendication 2, caractérisé par les caractéristiques suivantes :
a) les aimants de freinage (2) constitués par une bobine magnétique (3) et un noyau magnétique (4) sont fixés respectivement à la face inférieure de la membrure supérieure (6) de telle sorte que la membrure supérieure forme la culasse magnétique des aimants de freinage ; et
c) la membrure inférieure (8) est formée par deux tronçons (8') de membrure inférieure, qui sont disposés parallèlement au-dessous de la bobine magnétique (3) et enserrent entre eux le noyau magnétique (4).

5. Frein linéaire à courants de Foucault selon la revendication 2, caractérisé par les caractéristiques suivantes :
a) les aimants de freinage (2) formés d'une bobine magnétique (3) et d'un noyau magnétique (4) sont disposés respectivement sur la face inférieure de la membrure supérieure (6) de telle sorte que la membrure supérieure forme la culasse magnétique des aimants de freinage, le noyau magnétique (4) étant formé d'un seul tenant avec la membrure supérieure (6) et s'étendant vers le bas à partir de cette dernière, à travers la section transversale intérieure de la bobine magnétique (3); et
b) la membrure inférieure (8) est formée de deux tronçons de membrure inférieure (8a''), qui s'étendent parallèlement et au-dessous de la bobine magnétique et au-dessous de la bobine magnétique (3) et enserrent entre eux le noyau magnétique (4) et par deux éléments de plaque (8b'') qui sont raccordés l'un à l'autre d'un seul tenant et recouvrent la bobine magnétique (3) sur son côté extérieur et qui sont reliés à la membrure supérieure (6) de telle sorte que la membrure supérieure et la membrure inférieure forment un profilé de caisse fermé dans lequel les bobines magnétiques (3) sont directement fixées par coulée ou insérées séparément.
